# EUROPEAN PATENT APPLICATION

(11) **EP 4 799 865 A1**
(43) Date of publication of application: **02.09.2026**
(21) Application number: 25161069.7
(22) Date of filing: 28.02.2025
(51) Int. Cl.: B60Q 1/50, F21S 43/14, F21S 43/236, F21S 43/237, F21S 43/239, F21S 43/243, F21S 43/235, F21S 43/20

(54) **AUTOMOTIVE LIGHTING DEVICE AND VEHICLE**

(71) Applicant: Wuhan Lotus Cars Co., Ltd., Wuhan, Hubei 430056 (CN)
(72) Inventor: GROSS, Martin, 65428 Rüsselsheim (DE); LANGKABEL, Frank, 55283 Nierstein (DE); HABERKORN, Rouven, 65934 Frankfurt (DE); NDJEUNDOUN, Paul, 65428 Rüsselsheim (DE)
(74) Representative: Boult Wade Tennant LLP

(57) **Abstract**

The present application provides an automotive lighting device and a vehicle, and relates to the field of automotive components technologies. The automotive lighting device includes: a lampshade (100), at least one indicator light module (200) and a display module (300). The lampshade (100) is provided with a light-transmitting portion (101). The indicator light module (200) is arranged in the lampshade (100). The indicator light module (200) is provided with a light-emitting portion (201), the light-emitting portion is arranged corresponding to the light-transmitting portion (101), and light emitted by the indicator light module penetrates the lampshade via the light-emitting portion (201) and the light-transmitting portion (101). The display module (300) is arranged in the lampshade (100). The display module (300) is provided with a display portion (301). The display portion (301) is arranged corresponding to the light-transmitting portion (101) and is used for displaying a charging status of a vehicle via the light-transmitting portion (101). Thus, the automotive lighting device provided by the present application enables a user to intuitively check a charging status of the vehicle at a remote location, which is convenient and quick, and improves a user experience about the vehicle.

## Description

### TECHNICAL FIELD

The present application relates to the field of automotive components technologies and, in particular, to an automotive lighting device and a vehicle.

### BACKGROUND

With a continuous development of new energy electric vehicles, the new energy electric vehicles are no longer just as a vehicle for commuting, and people have higher demand.

Currently, when a user wants to get a charging status of a vehicle at a remote location, the user may check the charging status through an application on a mobile terminal.

However, the above manner for checking the charging status of the vehicle is not intuitive enough, thereby affecting the user experience about the vehicle.

### SUMMARY

In view of the above, the present application provides an automotive lighting device and a vehicle, so as to solve an existing problem of being unable to intuitively check a charging status at a remote location during a charging process of an electric vehicle.

In a first aspect, the present application provides an automotive lighting device, including:
a lampshade, where the lampshade is provided with a light-transmitting portion;
at least one indicator light module, where the indicator light module is arranged in the lampshade, the indicator light module is provided with a light-emitting portion, the light-emitting portion is arranged corresponding to the light-transmitting portion, and light emitted by the indicator light module penetrates the lampshade via the light-emitting portion and the light-transmitting portion; and
a display module, where the display module is arranged in the lampshade, the display module is provided with a display portion, and the display portion is arranged corresponding to the light-transmitting portion, and is used for displaying a charging status of a vehicle via the light-transmitting portion.

In a possible implementation, two indicator light modules are provided, and the display module is located between the two indicator lamp modules.

In a possible implementation, the display module is connected to at least one of the two indicator light modules.

In a possible implementation, a preset gap is provided between the light-emitting portion, the display portion and an inner wall of the lampshade.

In a possible implementation, the display module is connected to an inner wall of the lampshade, and the display portion is located between the light-emitting portion and the light-transmitting portion, so that the light emitted by the indicator light module penetrates the lampshade via the light-emitting portion, the display portion and the light-transmitting portion in sequence.

In a possible implementation, the display module includes a bracket and a display screen, the bracket is connected to the inner wall of the lampshade, and the display screen is connected to the bracket; and
the display screen faces the light-transmitting portion, and the display portion is located on the display screen.

In a possible implementation, the lampshade includes an outer lens and a housing, the housing is connected to the outer lens, and the light-transmitting portion is located on the outer lens.

In a possible implementation, the outer lens and the housing together form an accommodating cavity, the indicator light module is located in the accommodating cavity, and the indicator light module is connected to the housing.

In a possible implementation, the display module includes an organic light emitting diode transparent display screen or a micro light emitting diode transparent display screen.

In a second aspect, the present application provides a vehicle, including a vehicle body, where the vehicle body is provided with the automotive lighting device according to any of the first aspect.

In a possible implementation, the automotive lighting device is arranged at a tail portion of the vehicle.

In the automotive lighting device and the vehicle provided by the present application, the automotive lighting device includes: a lampshade, at least one indicator light module and a display module. The lampshade is provided with a light-transmitting portion. The indicator light module is arranged in the lampshade. The indicator light module is provided with a light-emitting portion, the light-emitting portion is arranged corresponding to the light-transmitting portion, and light emitted by the indicator light module penetrates the lampshade via the light-emitting portion and the light-transmitting portion, so as to display an indication signal of the vehicle. The display module is arranged in the lampshade. The display module is provided with a display portion. The display portion is arranged corresponding to the light-transmitting portion, which enables the display portion to display a charging status of the vehicle via the light-transmitting portion. Thus, the automotive lighting device provided by the present application enables a user to intuitively check a charging status of the vehicle at a remote location, which is convenient and quick, and improves a user experience about the vehicle.

### BRIEF DESCRIPTION OF DRAWINGS

To describe technical solutions in embodiments of the present application or in the prior art more clearly, the following briefly introduces the accompanying drawings required for describing the embodiments or the prior art. Apparently, the accompanying drawings in the following description show some embodiments of the present application. Other drawings may also be obtained according to these drawings without creative efforts for those of ordinary skill in the art.
FIG. 1 is a schematic structural diagram of a first automotive lighting device according to an embodiment of the present application.
FIG. 2 is a schematic partial structural diagram for FIG. 1 from another perspective according to an embodiment of the present application.
FIG. 3 is a schematic structural diagram of a second automotive lighting device according to an embodiment of the present application.

### Reference signs:

100 - lampshade; 101 - light-transmitting portion; 102 - light-blocking portion; 110 - outer lens; 120 - housing; 200 - indicator light module; 201 - light-emitting portion; 300 - display module; 301 - display portion; 310 - bracket; 320 - display screen.

### DESCRIPTION OF EMBODIMENTS

Exemplary embodiments will be described in detail, with examples shown in the accompanying drawings. With regard to the description related to the accompanying drawings, unless stated otherwise, the same numbering in different drawings may represent the same or similar elements. The embodiments described in the following exemplary embodiments do not represent all embodiments consistent with the present application. On the contrary, they are merely examples of methods and apparatuses consistent with some aspects of the present application, as described in the appended claims.

The terms "first", "second", "third", "fourth", and the like (if any) in the description, claims and the accompanying drawings of the embodiments of the present application are used for distinguishing similar objects, and are not used for describing a specific sequence or order. It should be understood that data used in this manner may be interchanged where appropriate so that the embodiments of the present application described herein can be implemented, for example, in sequences other than those illustrated or described herein. In addition, the terms "include" and "have", and any variants thereof, are intended to cover a non-exclusive inclusion. For example, a process, a method, a system, a product, or a device that includes a series of steps or units is not necessarily limited to those steps or units that are expressly listed, but may include other steps or units that are not expressly listed or inherent to such process, method, system, product, or device.

Currently, most electric vehicles are not provided with an external charging status indicator light. Generally, a user can check a charging status through a display instrument within a vehicle or an application on a mobile phone. However, for the two checking manners, one cannot get the charging status in time at a relatively long distance in the former manner. For example, the vehicle is parked at a public charging station, while the user is eating at a restaurant or taking a break, thus it cannot be determined whether the charging of the vehicle is completed. In the latter manner, a check shall be made by means of remotely connecting the vehicle via a mobile phone, and thus one cannot immediately and intuitively get the charging status, which causes an inconvenient operation.

In addition, if a plurality of RGB LED indicator lights are integrated into a traditional rear lamp to display a charging status, i.e., charging indicator lights are alternately arranged among conventional LED lights, and in order to enable the light of various indicator lights to have the same uniformity, a size of an indicator light module needs to be increased. Thus, more packaging space is required; and since the space in the rear lamp is relatively small, the packaging thereof becomes difficult.

In view of the described problems in the prior art, the present application provides an automotive lighting device and a vehicle. The automotive lighting device provided by the present application includes a lampshade, at least one indicator light module and a display module. The lampshade is provided with a light-transmitting portion. The indicator light module is arranged in the lampshade. The indicator light module is provided with a light-emitting portion, the light-emitting portion is arranged corresponding to the light-transmitting portion, and light emitted by the indicator light module penetrates the lampshade via the light-emitting portion and the light-transmitting portion, so as to display an indication signal of the vehicle. The display module is arranged in the lampshade. The display module is provided with a display portion. The display portion is arranged corresponding to the light-transmitting portion, which enables the display portion to display a charging status of the vehicle via the light-transmitting portion. Thus, a user can intuitively check a charging status of the vehicle at a remote location, which is convenient and quick, and improves a user experience about the vehicle.

The technical solution of the present application will be described in detail below with reference to specific embodiments. The following specific embodiments may be combined with each other, and the same or similar concepts or processes may not be repeated in some embodiments.

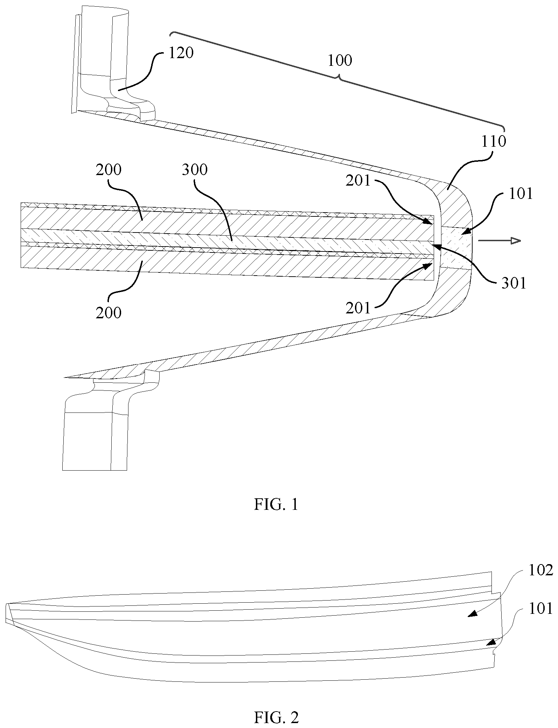

In a first aspect, referring to FIG. 1 to FIG. 3, an embodiment of the present application provides an automotive lighting device, including a lampshade 100, at least one indicator light module 200 and a display module 300, where the lampshade 100 is provided with a light-transmitting portion 101.

The indicator light module 200 is arranged in the lampshade 100. The indicator light module 200 is provided with a light-emitting portion 201, and the light-emitting portion 201 is arranged corresponding to the light-transmitting portion 101, so that light emitted by the indicator light module 200 penetrates/passes through the lampshade 100 via the light-emitting portion 201 and the light-transmitting portion 101.

The display module 300 is arranged in the lampshade 100, and the display module 300 is provided with a display portion 301. The display portion 301 is arranged corresponding to the light-transmitting portion 101, and is used for displaying a charging status of a vehicle via the light-transmitting portion 101.

The lampshade 100 in this embodiment is used for providing an installation space for the indicator light module 200 and the display module 300. It may be formed by assembling a plurality of components, and has an installation space or an accommodating cavity therein. The lampshade 100 is configured to be mounted at a tail portion of a vehicle, and one side of the lampshade facing away from the vehicle is provided with the light-transmitting portion 101, such as a long-strip-shape transparent area, to facilitate light passing through. It should be noted that, the lampshade being mounted at the tail portion of the vehicle is only illustrative but not restrictive. The lampshade can also be mounted at another position of the vehicle, e.g., a front portion of the vehicle. A specific position of the lampshade is not limited in the embodiments of the present application. In other words, the automotive lighting device can be arranged at a tail portion of the vehicle, can also be arranged at a front portion of the vehicle, and the like, the position can be determined according to actual requirements.

The indicator light module 200 in this embodiment is used for sending a traditional indication signal for indicating such as steering, driving, braking, etc. The indicator light module may include a circuit board, an LED light and a light guide bar. The circuit board may be connected/arranged within the lampshade 100. The LED light is arranged on the circuit board. The light guide bar is arranged on the LED light. The light-emitting portion 201 is located at one end of the light guide bar and corresponds to the light-transmitting portion 101, so as to guide the indication signal.

The display module 300 in this embodiment is used for displaying a charging status of the vehicle, and may be a transparent display screen. The display module 300 is arranged in the lampshade 100, and a side of the display module 300 facing the light-transmitting portion 101 has a display portion 301.

Specifically, when the vehicle is in a normal driving status, the light emitted by the indicator light module 200 penetrates the lampshade 100 via the light-emitting portion 201 and the light-transmitting portion 101, so as to display an indication signal of the vehicle, such as steering, driving, braking, and the like. When the vehicle is in a charging status, the display portion 301 displays a charging status of the vehicle via the light-transmitting portion 101, such as displaying a current battery level, color indicating a status of the battery, and the like.

It can be understood that, compared with a remote operation of checking a charging status through the application on the mobile phone in the prior art, applying the automotive lighting device in this embodiment can enable a user to intuitively check a charging status of the vehicle at a remote location, which is convenient and quick, and can improve a user experience about the vehicle.

It should be noted that, the automotive lighting device can also be applied to other apparatuses, so that a user can check a charging status of an apparatus at a remote location, the apparatus includes but not limited to a vehicle, that is, a type of the apparatus is not limited in the present application. It should also be noted that, the automotive lighting device can also be referred to as other names, which is also not limited in the present application.

Thus, the automotive lighting device provided by the embodiments of the present application includes the lampshade 100, at least one indicator light module 200 and the display module 300. The lampshade 100 is provided with the light-transmitting portion 101. The indicator light module 200 is arranged in the lampshade 100. The indicator light module 200 is provided with the light-emitting portion 201. The light-emitting portion 201 is arranged corresponding to the light-transmitting portion 101, so that light emitted by the indicator light module 200 penetrates the lampshade 100 via the light-emitting portion 201 and the light-transmitting portion 101, so as to display an indication signal of the vehicle. The display module 300 is arranged in the lampshade 100. The display module 300 is provided with the display portion 301. The display portion 301 is arranged corresponding to the light-transmitting portion 101, which enables the display portion 301 to display a charging status of the vehicle via the light-transmitting portion 101. Thus, a user can intuitively check a charging status of the vehicle at a remote location, which is convenient and quick, and improves a user experience about the vehicle.

In a possible design, two indicator light modules 200 are provided, and the display module 300 is located between the two indicator light modules 200.

Specifically, as shown in FIG. 1, two indicator light modules 200 are configured to display different colors, such as red and yellow, etc. The two indicator light modules 200 may be arranged in an up-down manner; and the display module 300 is arranged in an interlayer space between the two indicator light modules 200. The display portion 301 and two light-emitting portions 201 are arranged side by side, and are aligned with the light-transmitting portion 101, so that a limited space in the rear lamp is fully used.

It should be noted that, in order to prevent a peripheral side of the light-transmitting portion 101 from transmitting light, as shown in FIG. 2, a light-blocking portion 102 may be provided around the peripheral side of the light-transmitting portion 101.

Of course, more indicator light modules 200 may also be arranged, which may be determined according to actual requirements, and is not limited in this embodiment.

Further, in this embodiment, the display module 300 is connected to at least one of the two indicator light modules 200.

In this way, as shown in FIG. 1, installation and fixation of the display module 300 are facilitated. The display module 300 may be connected to the indicator light module 200 by means of screwing, welding, clamping, plugging, and the like.

Still further, in this embodiment, a preset gap is provided between the light-emitting portion 201, the display portion 301 and an inner wall of the lampshade 100.

In this way, still referring to FIG. 1, the light-emitting portion 201 and the display portion 301 are prevented from being in rigid contact with the inner wall of the lampshade 100, thereby preventing damage caused by collisions in vibration tests. A specific size of the preset gap may be determined according to actual requirements, which is not limited in this embodiment.

In another possible design, the display module 300 is connected to an inner wall of the lampshade 100, and the display portion 301 is located between the light-emitting portion 201 and the light-transmitting portion 101, so that the light emitted by the indicator light module 200 penetrates the lampshade 100 via the light-emitting portion 201, the display portion 301 and the light-transmitting portion 101 sequentially.

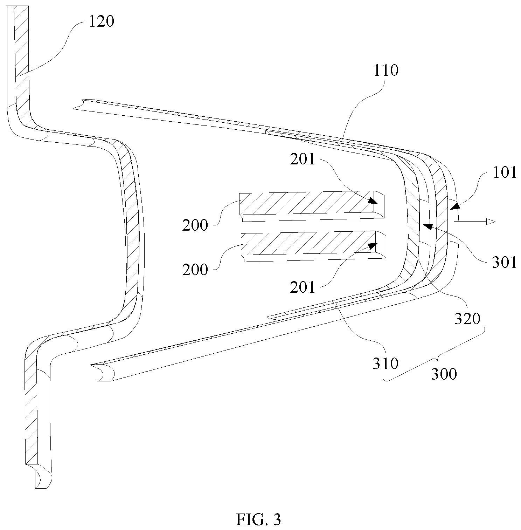

Specifically, as shown in FIG. 3, the display module 300 may be connected to the inner wall of the lampshade 100 by means of screwing, welding, clamping, plugging, etc. The display portion 301 is located between the light-emitting portion 201 and the light-transmitting portion 101.

In this way, when the vehicle is in a normal driving status, the light emitted from the indicator light module 200 penetrates the lampshade 100 via the light-emitting portion 201, the display portion 301 and the light-transmitting portion 101 in sequence, so as to display an indication signal of the vehicle. When the vehicle is in a charging status, the display portion 301 can display the charging status of the vehicle via the light-transmitting portion 101.

It should be noted that, one side of the display portion 301 facing the light-transmitting portion 101 may be designed with a black high gloss effect, so as to avoid the see-through issue in a case where the inside is seen from the outside through the light-transmitting portion 101.

Further, in this embodiment, the display module 300 includes a bracket 310 and a display screen 320. The bracket 310 is connected to the inner wall of the lampshade 100, and the display screen 320 is connected to the bracket 310.

The display screen 320 faces the light-transmitting portion 101, and the display portion 301 is located on the display screen 320.

Specifically, still referring to FIG. 3, the bracket 310 matches with a part of the inner wall of the lampshade 100, and may be connected to the inner wall of the lampshade 100 by means of screwing, welding, clamping, plugging and the like. The display screen 320 can be a transparent display screen, which can be designed into a desired shape according to actual requirements, and then is connected to the bracket 310 by means of embedding, screwing, clamping, etc.

The display screen 320 faces a side of the light-transmitting portion 101, and the display portion 301 is located on the display screen 320, so as to display a charging status of the vehicle. The specific shapes, sizes and the like of the bracket 310 and the display screen 320 may be determined according to actual requirements, which are not specifically limited in this embodiment.

In some embodiments, the lampshade 100 includes an outer lens 110 and a housing 120, where the housing 120 is connected to the outer lens 110, and the light-transmitting portion 101 is located on the outer lens 110.

Specifically, the outer lens 110 may be connected to the housing 120 by means of screwing, clamping, etc. The light-transmitting portion 101 is located at the outer lens 110. The housing 120 may be connected to a tail portion of the vehicle by means of screwing, clamping, and the like, and may provide a mounting basis for the indicator light module 200, the display module 300, etc.

Further, in this embodiment, the outer lens 110 and the housing 120 together form an accommodating cavity. The indicator light module 200 is located in the accommodating cavity, and the indicator light module 200 is connected to the housing 120.

Specifically, still referring to FIG. 3, the outer lens 110 and the housing 120 jointly form the accommodating cavity. The accommodating cavity is used for accommodating the indicator light module 200, the display module 300, and the like. The indicator light module 200 can be connected to the housing 120 by means of screwing, clamping, and the like, which facilitates manufacturing and installation.

Specific shapes, structures, sizes, and the like of the outer lens 110 and the housing 120 may be determined according to actual requirements, which are not specifically limited in this embodiment.

In some embodiments, the display module 300 includes an organic light emitting diode transparent display screen or a micro light emitting diode transparent display screen.

The organic light emitting diode transparent display screen is an OLED transparent display screen, and the micro light emitting diode transparent display screen is a Micro LED transparent display screen. In this way, not only a charging status can be flexibly displayed, but also a limited space in an existing rear lamp can be fully used, to design a required shape and size. A function of displaying a charging status can be realized based on a conventional rear lamp without modifying an LED light on an existing PCB, thereby facilitating package.

In a second aspect, an embodiment of the present application further provides a vehicle, including a vehicle body, and the vehicle body is provided with the automotive lighting device provided in any one of the foregoing embodiments.

The automotive lighting device has been described in detail in the above embodiments, which is not repeated herein.

In the vehicle provided by the embodiments of the present application, the automotive lighting device is configured such that the automotive lighting device includes a lampshade 100, at least one indicator light module 200 and a display module 300. The lampshade 100 is provided with the light-transmitting portion 101. The indicator light module 200 is arranged in the lampshade 100. The indicator light module 200 is provided with the light-emitting portion 201. The light-emitting portion 201 is arranged corresponding to the light-transmitting portion 101, so that light emitted by the indicator light module 200 penetrates the lampshade 100 via the light-emitting portion 201 and the light-transmitting portion 101, so as to display an indication signal of the vehicle. The display module 300 is arranged in the lampshade 100. The display module 300 is provided with the display portion 301. The display portion 301 is arranged corresponding to the light-transmitting portion 101, which enables the display portion 301 to display a charging status of the vehicle via the light-transmitting portion 101. Thus, a user can intuitively check a charging status of the vehicle at a remote location, which is convenient and quick, and improves a user experience about the vehicle.

Further, in this embodiment, the automotive lighting device is arranged at a tail portion of the vehicle.

Specifically, the automotive lighting device is arranged at the tail portion of the vehicle, so as to enable the rear lamp of the vehicle to display an indicator signal or the charging status, such that a user can intuitively check a battery level of the vehicle at a remote location through the rear lamp.

Other embodiments of the present application will be readily apparent to those skilled in the art based on the description and practice of the solution disclosed herein. The present application is intended to cover any variations, uses, or adaptations of the present application, and the variations, uses, or adaptations follow the general principles of the present application and include common knowledge or general technical means in the technical field not disclosed in the present application. It is intended that the description and embodiments be considered as only examples, with the scope and spirit of the present application being indicated by the claims.

It should be understood that the present application is not limited to the exact structure described above and shown in the drawings, and that various modifications and variations may be made without departing from the scope thereof. The scope of the present application is limited only by the appended claims.

## Claims

1. An automotive lighting device, comprising:
a lampshade (100), wherein the lampshade (100) is provided with a light-transmitting portion (101);
at least one indicator light module (200), wherein the indicator light module (200) is arranged in the lampshade (100), the indicator light module (200) is provided with a light-emitting portion (201), the light-emitting portion (201) is arranged corresponding to the light-transmitting portion (101), and light emitted by the indicator light module (200) penetrates the lampshade (100) via the light-emitting portion (201) and the light-transmitting portion (101); and
a display module (300), wherein the display module (300) is arranged in the lampshade (100), the display module (300) is provided with a display portion (301), and the display portion (301) is arranged corresponding to the light-transmitting portion (101), and is used for displaying a charging status of a vehicle via the light-transmitting portion (101).

2. The automotive lighting device according to claim 1, wherein two indicator light modules (200) are provided, and the display module (300) is located between the two indicator lamp modules (200).

3. The automotive lighting device according to claim 2, wherein the display module (300) is connected to at least one of the two indicator light modules (200).

4. The automotive lighting device according to claim 2 or 3, wherein a preset gap is provided between the light-emitting portion (201), the display portion (301) and an inner wall of the lampshade (100).

5. The automotive lighting device according to claim 1, wherein the display module (300) is connected to an inner wall of the lampshade (100), and the display portion (301) is located between the light-emitting portion (201) and the light-transmitting portion (101), so that the light emitted by the indicator light module (200) penetrates the lampshade (100) via the light-emitting portion (201), the display portion (301) and the light-transmitting portion (101) in sequence.

6. The automotive lighting device according to claim 5, wherein the display module (300) comprises a bracket (310) and a display screen (320), the bracket (310) is connected to the inner wall of the lampshade (100), and the display screen (320) is connected to the bracket (310); and
the display screen (320) faces the light-transmitting portion (101), and the display portion (301) is located on the display screen (320).

7. The automotive lighting device according to any one of claims 1 to 6, wherein the lampshade (100) comprises an outer lens (110) and a housing (120), the housing (120) is connected to the outer lens (110), and the light-transmitting portion (101) is located on the outer lens (110).

8. The automotive lighting device according to claim 7, wherein the outer lens (110) and the housing (120) together form an accommodating cavity, the indicator light module (200) is located in the accommodating cavity, and the indicator light module (200) is connected to the housing (120).

9. The automotive lighting device according to any one of claims 1 to 8, wherein the display module (300) comprises an organic light emitting diode transparent display screen or a micro light emitting diode transparent display screen.

10. A vehicle, comprising a vehicle body, wherein the vehicle body is provided with the automotive lighting device according to any one of claims 1 to 9.

11. The vehicle according to claim 10, wherein the automotive lighting device is arranged at a tail portion of the vehicle.

## Amended claims

### Amended claims in accordance with Rule 137(2) EPC.

1. An automotive lighting device, comprising:
a lampshade (100), wherein the lampshade (100) is provided with a light-transmitting portion (101);
at least one indicator light module (200), wherein the indicator light module (200) is arranged in the lampshade (100), the indicator light module (200) is provided with a light-emitting portion (201), the light-emitting portion (201) is arranged corresponding to the light-transmitting portion (101), which enables light emitted by the indicator light module (200) to penetrate the lampshade (100) via the light-emitting portion (201) and the light-transmitting portion (101) to display an indication signal of a vehicle; and
a display module (300), wherein the display module (300) is arranged in the lampshade (100), the display module (300) is provided with a display portion (301), and the display portion (301) is arranged corresponding to the light-transmitting portion (101), which enables the display portion (301) to display a charging status of a battery of the vehicle via the light-transmitting portion (101);
wherein the lampshade (100) has a respective installation space for the indicator light module (200) and the display module (300).

2. The automotive lighting device according to claim 1, wherein two indicator light modules (200) are provided, and the display module (300) is located between the two indicator lamp modules (200).

3. The automotive lighting device according to claim 2, wherein the display module (300) is connected to at least one of the two indicator light modules (200).

4. The automotive lighting device according to claim 2 or 3, wherein a preset gap is provided between the light-emitting portion (201), the display portion (301) and an inner wall of the lampshade (100).

5. The automotive lighting device according to claim 1, wherein the display module (300) is connected to an inner wall of the lampshade (100), and the display portion (301) is located between the light-emitting portion (201) and the light-transmitting portion (101), so that the light emitted by the indicator light module (200) penetrates the lampshade (100) via the light-emitting portion (201), the display portion (301) and the light-transmitting portion (101) in sequence.

6. The automotive lighting device according to claim 5, wherein the display module (300) comprises a bracket (310) and a display screen (320), the bracket (310) is connected to the inner wall of the lampshade (100), and the display screen (320) is connected to the bracket (310); and
the display screen (320) faces the light-transmitting portion (101), and the display portion (301) is located on the display screen (320).

7. The automotive lighting device according to any one of claims 1 to 6, wherein the lampshade (100) comprises an outer lens (110) and a housing (120), the housing (120) is connected to the outer lens (110), and the light-transmitting portion (101) is located on the outer lens (110).

8. The automotive lighting device according to claim 7, wherein the outer lens (110) and the housing (120) together form an accommodating cavity, the indicator light module (200) is located in the accommodating cavity, and the indicator light module (200) is connected to the housing (120).

9. The automotive lighting device according to any one of claims 1 to 8, wherein the display module (300) comprises an organic light emitting diode transparent display screen or a micro light emitting diode transparent display screen.

10. A vehicle, comprising a vehicle body, wherein the vehicle body is provided with the automotive lighting device according to any one of claims 1 to 9.

11. The vehicle according to claim 10, wherein the automotive lighting device is arranged at a tail portion of the vehicle.
